# DEMANDE DE BREVET EUROPEEN

(11) **EP 4 498 575 A1**
(43) Date de publication de la demande: **29.01.2025**
(21) Numéro de dépôt: 23306283.5
(22) Date de dépôt: 25.07.2023
(51) Int. Cl.: H02K 1/20, H02K 1/32, H02K 9/06, H02K 9/04

(54) **MOTEUR ÉLECTRIQUE À VENTILATION INTÉGRÉE, NOTAMMENT POUR UN VÉHICULE FERROVIAIRE**

(71) Demandeur: ALSTOM Holdings, 93400 Saint-Ouen-sur-Seine (FR)
(72) Inventeur: BOUALEM, Benali, 25660 SAONE (FR); TRIMAILLE, Gaëtan, 25440 CHENECEY-BUILLON (FR)
(74) Mandataire: Lavoix

(57) **Abrégé**

Le moteur électrique (10) comprend un rotor (20) et un stator (22) logés dans un boitier (12), et comporte un ventilateur (42) motorisé pour le refroidissement du rotor (20) et du stator (22), le moteur électrique (10) comprenant au moins un premier canal (30) de refroidissement du stator (22) et au moins un second canal (34) de refroidissement du rotor (20), à travers lesquels passent de l'air entrainé en mouvement par le ventilateur (42). Le moteur électrique (10) comporte au moins un organe de déflection d'air (54), guidant l'air provenant du second canal (34) depuis ce second canal (34) jusqu'à une sortie (40) du boitier (12).

## Description

La présente invention concerne un moteur électrique à ventilation intégrée, notamment pour un véhicule ferroviaire.

On connait déjà, dans l'état de la technique, un moteur électrique, comprenant un rotor et un stator logés dans un boitier, et comportant un ventilateur motorisé pour le refroidissement du rotor et du stator, le moteur électrique comprenant au moins un premier canal de refroidissement du stator et au moins un second canal de refroidissement du rotor, à travers lesquels passent de l'air entrainé en mouvement par le ventilateur.

L'invention concerne particulièrement un moteur électrique à flux d'air tiré, c'est-à-dire dans lequel le flux d'air est aspiré à travers les canaux de refroidissement par le ventilateur motorisé, agencé en aval de ces canaux de refroidissement.

Il existe des ventilateurs à pales droites, c'est-à-dire chacune dans un plan contenant l'axe de rotation du ventilateur, et des ventilateurs à pales inclinées. Les ventilateurs à pales inclinées permettent d'optimiser le débit du flux d'air et de réduire la puissance consommée par le moteur du ventilateur. En effet, cette conception donne un meilleur rendement aéraulique qu'une conception avec des pales radiales droites.

Il est toutefois à noter qu'un ventilateur à pales inclinées ne peut fonctionner que dans un sens de rotation.

A l'inverse, le rotor du moteur peut tourner dans les deux sens de rotation opposés, donc soit dans le même sens de rotation que le ventilateur, soit dans le sens de rotation opposé.

Il est toutefois à noter que le flux d'air subit des perturbations et des comportements différents selon le sens de rotation différentiel entre le ventilateur et le rotor du moteur.

En particulier, l'air provenant du rotor traverse axialement les seconds canaux de refroidissement du rotor. En sortie de ces seconds canaux, l'air est centrifugé et aspiré par le ventilateur. Cet effet centrifuge augmente de force à mesure que la vitesse de rotation du rotor augmente. L'air en rotation vient impacter contre les pales du ventilateur.

L'intensité de la vitesse d'air est plus importante en sortie du rotor mais s'atténue progressivement lorsque on approche du ventilateur. On peut facilement conclure que plus le ventilateur est proche du rotor plus cet effet d'impact est plus prononcé.

Lorsque le rotor tourne dans le même sens que le ventilateur, la zone d'impact est plus importante que pour le sens où le rotor tourne en opposition du sens ventilateur.

Il y a par ailleurs un changement de direction du flux d'air par les pales qui est nettement plus important lorsque le rotor tourne dans le même sens que le ventilateur.

Cela entraine une augmentation des pertes de charges lorsque le rotor tourne dans le même sens que le ventilateur. Par conséquent, il y a une baisse du débit total, qui implique également une baisse du bruit.

L'invention a notamment pour but de réduire le bruit de moteurs équipés de ventilateur motorisé à pales inclinées, et à permettre un comportement homogène (même débit et même bruit) dans les deux sens de rotation, afin de ne pas nécessiter de considérer le débit minimal pour le dimensionnement thermique du moteur.

A cet effet, l'invention a notamment pour objet un moteur électrique, comprenant un rotor et un stator logés dans un boitier, et comportant un ventilateur motorisé pour le refroidissement du rotor et du stator, le moteur électrique comprenant au moins un premier canal de refroidissement du stator et au moins un second canal de refroidissement du rotor, à travers lesquels passent de l'air entrainé en mouvement par le ventilateur, caractérisé en ce que le moteur électrique comporte au moins un organe de déflection d'air, guidant l'air provenant du second canal depuis ce second canal jusqu'à une sortie du boitier.

L'organe de déflexion d'air est agencé entre le second canal et la sortie du boitier, guidant ainsi l'air sans que cet air soit centrifugé. L'air issu du ou des seconds canaux arrive donc vers une zone centrale du ventilateur, et ne vient pas impacter contre ses pales.

Un moteur électrique selon l'invention peut comporter en outre l'une ou plusieurs des caractéristiques suivantes, prises seules ou selon toutes combinaisons techniquement envisageables.
- L'organe de déflection d'air comporte une partie de guidage d'air de forme générale cylindrique.
- L'organe de déflection d'air guide séparément l'air provenant du premier canal et l'air provenant du second canal vers la sortie du boitier, de sorte que l'air provenant du premier canal et l'air provenant du second canal ne se rencontrent pas à l'intérieur du boitier.
- Le boitier comporte une première paroi comprenant, pour chaque premier canal, une première entrée d'air débouchant en regard de ce premier canal, et comprenant au moins une seconde entrée d'air à proximité des seconds canaux.
- Le moteur électrique comprend un organe de motorisation du ventilateur, le ventilateur comportant des pales secondaires pour la ventilation de l'organe de motorisation, l'organe de motorisation comportant au moins un passage de circulation d'air, à travers lequel de l'air est aspiré par le ventilateur du fait de ses pales secondaires.
- Le ventilateur comporte des pales principales entrainant l'air en mouvement pour l'aspiration à travers le boitier, les pales principales étant de type incliné.
- L'organe de déflection d'air est fixé à une seconde paroi du boitier, comportant la sortie, l'organe de déflection d'air s'étendant longitudinalement jusqu'à proximité du rotor, de sorte que l'air sortant de chaque second canal passe nécessairement dans l'organe de déflection d'air.
- La sortie est délimitée par un contour externe défini par un diamètre externe et un contour interne défini par un diamètre interne, l'organe de déflection d'air comportant une partie de guidage d'air présentant un diamètre compris entre le diamètre externe et le diamètre interne.
- L'organe de déflexion d'air comporte des pales de redressement, sensiblement radiales.

L'invention concerne également un véhicule ferroviaire, caractérisé en ce qu'il comporte au moins un moteur électrique tel que défini précédemment.

Différents aspects et avantages de l'invention seront mis en lumière dans la description qui va suivre, donnée uniquement à titre d'exemple et faite en se référant aux figures annexées, parmi lesquelles :
[Fig 1] La figure 1 est une demi-vue schématique en coupe axiale d'un moteur électrique selon un exemple de mode de réalisation de l'invention ;
[Fig 2] La figure 2 est une vue en perspective d'une paroi d'un boitier du moteur de la figure 1, équipée d'un organe de déflexion selon l'invention.

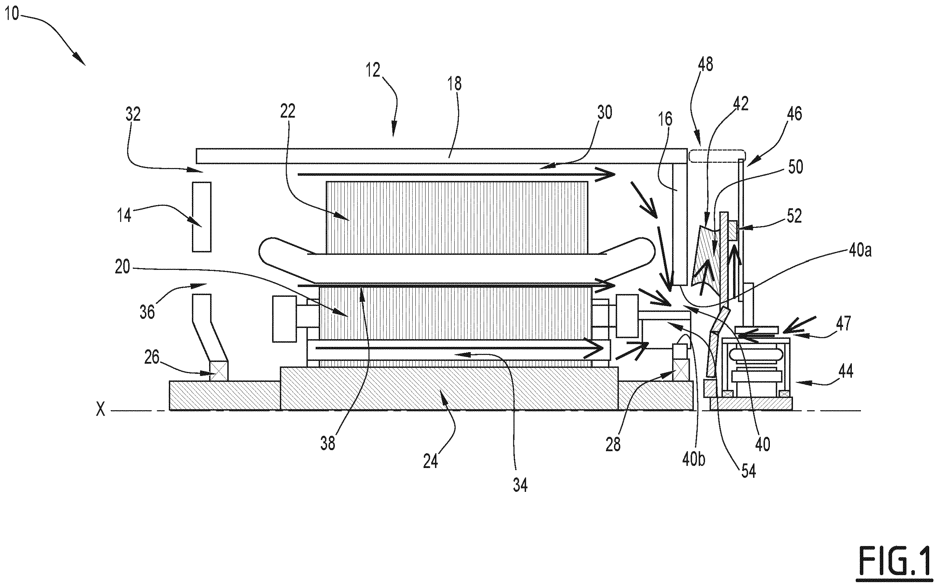

On a représenté, sur la figure 1, un moteur électrique 10 selon un exemple de mode de réalisation de l'invention.

Le moteur électrique 10 comporte, de manière classique, un boitier 12 sensiblement de forme générale de révolution autour d'un axe central X. Seule une moitié de la coupe du moteur 10 est représentée sur la figure 1, l'autre moitié étant similaire du fait de la forme générale de révolution du moteur autour de l'axe central X.

Le boitier 12 comporte une première paroi 14 et une seconde paroi 16, ainsi qu'une paroi circonférentielle 18 de forme générale de révolution autour de l'axe central X, s'étendant parallèlement à l'axe central X entre la première paroi 14 et la seconde paroi 16.

Le moteur électrique 10 comporte, de manière classique, un rotor 20 et un stator 22.

Le rotor 20 est solidaire d'un arbre de sortie 24 de forme générale de révolution autour de l'axe central X, le rotor 20 et l'arbre 24 étant mobiles en rotation autour de cet axe central X.

L'arbre de sortie 24 est notamment guidé en rotation par un premier roulement 26 porté par la première paroi 14, et un second roulement 28 porté par la seconde paroi 16.

Au moins un premier canal 30 de circulation d'air, pour le refroidissement du stator 22, est défini radialement entre le stator 22 et la paroi circonférentielle 18. Avantageusement, le moteur 10 comporte une pluralité de tels premiers canaux 30, répartis circonférentiellement autour de l'axe central X.

La première paroi 14 comporte, pour chaque premier canal 30, une première entrée d'air 32 débouchant en regard de ce premier canal 30.

Le rotor 20 comporte par ailleurs au moins un second canal 34 de circulation d'air, pour le refroidissement de ce rotor 20. Avantageusement, le rotor 20 comporte une pluralité de tels seconds canaux 34, répartis circonférentiellement autour de l'axe central X.

La première paroi 14 comporte au moins une seconde entrée d'air 36 à proximité du ou des seconds canaux 34.

Par ailleurs, un entrefer est défini entre le rotor 20 et le stator 22, formant un troisième canal 38 de circulation d'air pour le refroidissement du rotor 20 et du stator 22. Ce troisième canal 38 est par exemple alimenté en air par la ou les secondes entrées d'air 36.

La seconde paroi 16 comporte une sortie d'air 40.

Le moteur 10 comporte, en amont de la sortir d'air 40, un ventilateur 42 destiné à aspirer l'air à travers le boitier 12. Le ventilateur 42 est mobile en rotation autour de l'axe central X, et comporte un organe de motorisation 44 classique.

L'organe de motorisation 44 est porté par le boitier 12, au moyen d'un flasque de fixation 46 reliant le boitier 12 à l'organe de motorisation 44. Le flasque de fixation 46 délimite avec la seconde paroi 16 un logement pour le ventilateur 42. Avantageusement, des sorties d'air latérales 48 sont prévues entre la seconde paroi 16 et le flasque 46.

Le ventilateur 42 comporte des pales principales 50 entrainant l'air en mouvement pour l'aspiration à travers le boitier 12. Les pales principales 50 sont de préférence de type incliné, c'est-à-dire qu'elles sont chacune inclinées par rapport à des plans radiaux, contrairement à des pales droites qui s'étendent dans des plans radiaux.

Il est à noter que l'invention pourrait toutefois être appliquée à un moteur dont le ventilateur présente des pales droites.

Avantageusement, le ventilateur 42 comporte des pales secondaires 52 pour la ventilation de l'organe de motorisation 44. L'organe de motorisation 44 comporte alors au moins un passage 47 de circulation d'air, à travers lequel de l'air est aspiré par le ventilateur 42 du fait de ses pales secondaires 52.

Le moteur électrique 10 selon l'invention comporte au moins un organe 54 de déflection d'air, guidant l'air provenant de chaque second canal 34 jusqu'à la sortie 40 définie dans la seconde paroi 16.

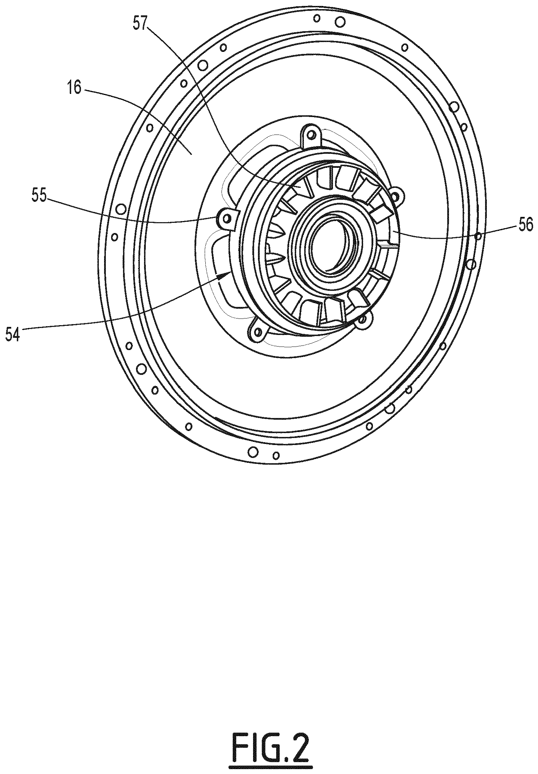

L'organe de déflection d'air 54 est représenté plus en détail sur la figure 2.

L'organe de déflection d'air 54 est par exemple fixé à la seconde paroi 16, et s'étend longitudinalement jusqu'à proximité du rotor 20, de sorte que l'air sortant de chaque second canal 34 passe nécessairement dans l'organe de déflection d'air 54.

L'organe de déflection 54 comporte par exemple des pattes de fixation 55 fixées à la seconde paroi 16, par exemple par vissage.

Avantageusement, l'organe de déflection d'air 54 comporte une partie de guidage d'air 56, délimitant le passage d'air entre chaque second canal 34 et la sortie 40.

Les pattes de fixation 55 sont de préférence venues de matière avec la partie de guidage 56.

Avantageusement, la partie de guidage d'air 56 présente une forme générale cylindrique. En variante, la partie de guidage d'air pourrait être tronconique.

La sortie 40 est délimitée par un contour externe 40a et un contour interne 40b. Le contour externe 40a est défini par un diamètre externe, et le contour interne 40b est défini par un diamètre interne, les diamètres externe et interne étant considérés autour de l'axe central X.

La partie de guidage d'air présente un diamètre compris entre le diamètre externe et le diamètre interne. Ainsi, la sortie 40 est répartie entre une sortie radialement intérieure, délimitée par le contour interne et la partie de guidage d'air, et une sortie radialement extérieure, délimitée par la partie de guidage d'air et le contour externe.

L'air issu du second canal 34 est guidé par la partie de guidage 56 vers la sortie radialement intérieure, et l'air issu du premier canal 30 est guidé par la partie de guidage 56 vers la sortie radialement extérieure.

Ainsi, l'air provenant du premier canal 30 et l'air provenant du second canal 34 ne se rencontrent pas à l'intérieur du boitier 12.

Il est à noter que l'air issu du troisième canal 38 est également guidé par la partie de guidage 56 vers la sortie radialement extérieure.

Avantageusement, l'organe de déflexion d'air 54 comporte, entre la partie de guidage 56 et le contour interne 40b, des pales de redressement 57, sensiblement radiales. Ces pales de redressement 57 sont destinées à réduire la rotation des flux d'air sortant des seconds canaux 34.

On notera que l'invention n'est pas limitée au mode de réalisation précédemment décrit, mais pourrait présenter diverses variantes complémentaires.

## Revendications

1. Moteur électrique (10), comprenant un rotor (20) et un stator (22) logés dans un boitier (12), et comportant un ventilateur (42) motorisé pour le refroidissement du rotor (20) et du stator (22), le moteur électrique (10) comprenant au moins un premier canal (30) de refroidissement du stator (22) et au moins un second canal (34) de refroidissement du rotor (20), à travers lesquels passent de l'air entrainé en mouvement par le ventilateur (42), **caractérisé en ce que** le moteur électrique (10) comporte au moins un organe de déflection d'air (54), guidant l'air provenant du second canal (34) depuis ce second canal (34) jusqu'à une sortie (40) du boitier (12).

2. Moteur électrique (10) selon la revendication 1, dans lequel l'organe de déflection d'air (54) comporte une partie de guidage d'air (56) de forme générale cylindrique.

3. Moteur électrique (10) selon la revendication 1 ou 2, dans lequel l'organe de déflection d'air (54) guide séparément l'air provenant du premier canal (30) et l'air provenant du second canal (34) vers la sortie du boitier (12), de sorte que l'air provenant du premier canal (30) et l'air provenant du second canal (34) ne se rencontrent pas à l'intérieur du boitier (12).

4. Moteur électrique (10) selon l'une quelconque des revendications précédentes, dans lequel le boitier (12) comporte une première paroi (14) comprenant, pour chaque premier canal (30), une première entrée d'air (32) débouchant en regard de ce premier canal (30), et comprenant au moins une seconde entrée d'air (36) à proximité du second canal (34).

5. Moteur électrique (10) selon l'une quelconque des revendications précédentes, comprenant un organe (44) de motorisation du ventilateur (42), le ventilateur (42) comportant des pales secondaires (52) pour la ventilation de l'organe de motorisation (44), l'organe de motorisation (44) comportant au moins un passage (47) de circulation d'air, à travers lequel de l'air est aspiré par le ventilateur (42) du fait de ses pales secondaires (52).

6. Moteur électrique (10) selon l'une quelconque des revendications précédentes, dans lequel le ventilateur (42) comporte des pales principales (50) entrainant l'air en mouvement pour l'aspiration à travers le boitier (12), les pales principales (50) étant de type incliné.

7. Moteur électrique (10) selon l'une quelconque des revendications précédentes, dans lequel l'organe de déflection d'air (54) est fixé à une seconde paroi (16) du boitier, comportant la sortie (40), l'organe de déflection d'air (54) s'étendant longitudinalement jusqu'à proximité du rotor (20), de sorte que l'air sortant de chaque second canal (34) passe nécessairement dans l'organe de déflection d'air (54).

8. Moteur électrique (10) selon l'une quelconque des revendications précédentes, dans lequel la sortie (40) est délimitée par un contour externe (40a) défini par un diamètre externe et un contour interne (40b) défini par un diamètre interne, l'organe de déflection d'air (54) comportant une partie de guidage d'air (56) présentant un diamètre compris entre le diamètre externe et le diamètre interne.

9. Moteur électrique (10) selon l'une quelconque des revendications précédentes, dans lequel l'organe de déflexion d'air (54) comporte des pales de redressement (57), sensiblement radiales.

10. Véhicule ferroviaire, **caractérisé en ce qu'**il comporte au moins un moteur électrique (10) selon l'une quelconque des revendications précédentes.
